Europäisches Patentamt

European Patent Office

Office européen des brevets

Veröffentlichungsnummer: **0 285 155**
**A1**

# EUROPÄISCHE PATENTANMELDUNG

Anmeldenummer: 88105237.7

Int. Cl.⁴: **B41J 3/04** , C09D 9/00

Anmeldetag: 31.03.88

Priorität: 02.04.87 DE 3711040

Veröffentlichungstag der Anmeldung:
05.10.88 Patentblatt 88/40

Benannte Vertragsstaaten:
AT BE CH DE FR GB IT LI LU NL SE

Anmelder: **Siemens Aktiengesellschaft Berlin und München**
**Wittelsbacherplatz 2**
**D-8000 München 2(DE)**

Erfinder: **Schimmelpfennig, Hans, Dipl.-Ing.**
**Borkenerweg 15**
**D-1000 Berlin 27(DE)**

Verfahren zum Reinigen des Austrittsbereiches der Schreibdüsen in Tintenstrahldruckern und Mittel zur Durchführung des Verfahrens.

Zum Reinigen des Austrittsbereiches (5) von Schreibdüsen in Tintenstrahldruckeinrichtungen wird vor oder während der Bewegung des Dichtschiebers der Austrittsbereich (5) mit der Reinigungsflüssigkeit benetzt, die aus einer mindestens 40 % Äthylalkohol oder Isopropanol enthaltenden wässrigen Lösung oder aus Fluorkohlenwasserstoffen besteht. Die Lösung enthält außerdem zur Erhöhung der Benetzungseigenschaften und Reinigungswirkung nichtionische Tenside z. B. Nonylphenolpolyglykoläther oder Fettsäurepolyglykoläther. Zum Entfernen der Reinigungsflüssigkeit aus dem Austrittsbereich (5) wird ein Spülvorgang am Tintenkopf (1) des Tintenstrahldruckers ausgelöst, bei dem Tinte aus dem Austrittsbereich (5) austritt.

FIG 1

EP 0 285 155 A1

# Verfahren zum Reinigen des Austrittsbereiches der Schreibdüsen in Tintenstrahldruckern und Mittel zur Durchführung des Verfahrens.

Die Erfindung betrifft ein Verfahren zum Reinigen des Austrittsbereiches von Schreibdüsen gemäß dem Oberbegriff des Patentanspruches 1 sowie Mittel zur Durchführung des Verfahrens gemäß den Oberbegriffen der Patentansprüche 3 und 4.

Abdeck-und Reinigungsvorrichtungen für Tintenschreibköpfe in Tintenstrahldruckern sind allgemein bekannt. So wird in der DE-OS 32 07 072 eine derartige Abdeck-und Reinigungseinrichtung beschrieben. Sie besteht aus einer vor der Düsenplatte verschwenkbar angeordneten Dichtplatte, die im Bereich der Austrittsöffnungen der Düsenplatte einen Ausschnitt mit scharfen Kanten aufweist und die mittels eines die Andruckkraft für die Düsenplatte liefernden Spannbügels gehalten wird. Zum Antrieb der Dichtplatte ist ein Kurbelmechanismus vorgesehen, dessen Kurbelstift in einen Schlitz der Dichtplatte eingreift und der zwischen zwei Anschlägen hin-und herbewegbar ist. Die Dichtplatte und der Antrieb sind dem Schreibkopf zugeordnet.

Derartige Reinigungs-und Abdichteinrichtungen dienen im allgemeinen dazu, die Austrittsöffnungen der Schreibdüsen vor anhaftender Tinte und Staub zu reinigen und diese Austrittsdüsen gegebenenfalls abzudichten.

Es ist weiterhin üblich bei Tintendruckwerken anhaftenden Papierstaub und Tintenreste die im Bereich der Austrittsöffnungen der Schreibdüsen verkrustet und verklebt sind, dadurch aufzuweichen und zu entfernen, daß der Druck im Tintensystem erhöht wird und dadurch Tinte aus den Austrittsdüsen austritt (DE-PS 26 10 518).

Es hat sich nun herausgestellt, daß bei Tintendruckwerken die durch Papierstaub und Tintenreste im Bereich der Düsenplatte verkrustet und verklebt sind, das Auslösen einer Spülprozedur mit anschließender Wischerbewegung des Dichtschiebers allein nicht ausreicht, um die Verunreinigungen zu entfernen.

Aufgabe der Erfindung ist es, ein Verfahren und Mittel zur Durchführung des Verfahrens der eingangs genannten Art so auszugestalten, daß in einfacher und kostengünstiger Weise auch stark verkrusteter Papierstaub, Tintenreste und andere Verunreinigungen an den Austrittsbereichen der Schreibdüsen entfernt werden kann.

Diese Aufgabe wird bei einem Verfahren der eingangs genannten Art gemäß dem kennzeichnenden Teil des ersten Patentanspruches gelöst.

Vorteilhafte Mittel zur Durchführung des Verfahrens sind durch die Ansprüche 2 und 9 gekennzeichnet.

Dadurch, daß vor oder während der Bewegung des Dichtschiebers der Austrittsbereich mit einer Reinigungsflüssigkeit benetzt wird, die entweder aus einer Alkohol enthaltenden wässrigen Lösung besteht oder einer Flüssigkeit, die die Tinte unterwandert, werden auch starke Verkrustungen von Papierstaub und Tintenresten gelöst und entfernt. Ein anschließender Spülvorgang des Tintenkopfes dient zur Entfernung der Reinigungsflüssigkeit aus dem Austrittsbereich.

Werden Tintenschreibflüssigkeiten, die Glykole enthalten, verwendet, so hat sich als besonders vorteilhafte Reinigungsflüssigkeit eine wässrige Lösung mit mindestens 40 % Äthylalkohol herausgestellt. Besonders wirksam sind eine wässrige Lösung mit einem Volumenanteil von 50 % Äthylalkohol und etwa 50 % Volumenanteil demineralisiertes Wasser bzw. 50 % Isopropanol und 50 % Wasser.

Isopropanol hat den Vorteil eines relativ hohen Siedepunktes.

In die Reinigungsflüssigkeit werden Zusätze in Form von nichtionischen Tensiden, z. B. Nonylphenolpolyglykoläther bzw. Fettsäurepolyglykoläther zur Verbesserung der funktionswichtigen Benetzungseigenschaften unter Erniedrigung der Oberflächenspannung gegeben. Dadurch erhöht sich die Reinigungswirkung.

Werden Düsenplatten mit tintenabstoßenden Eigenschaften verwendet, werden als Reinigungsflüssigkeiten Fluorchlorkohlenwasserstoffe oder niedrig siedende Kohlenwasserstoffe verwendet, die die Tinte unterwandern, lösen und abspülbar machen.

Anstelle von Äthylalkohol (Äthanol) ist auch Methanol verwendbar. Da Methanol aber gesundheitsschädliche Wirkungen entfalten, müssen bei Verwendung von Gemischen, die Methanol enthalten, besondere Schutzvorrichtungen vorgesehen sein.

Um das Verfahren besonders einfach durchführen zu können, wird eine an sich aus dem Pharmabereich bekannte Pipettenflasche zur Zuführung der Spülflüssigkeit verwendet. Diese Pipettenflasche besteht aus einem Vorratsbehälter und einem auf dem Vorratsbehälter aufschraubbaren Dosierelement aus einem länglichen elastischen Schlauchspülstück mit schmal dimensioniertem Mündungsstück, das eine einfache Zuführung der Reinigungsflüssigkeit in den Bereich der Austrittsdüsen ermöglicht.

Durch die Erfindung wird es in einfacher Weise möglich, Schriftbildstörungen auch dann zu beheben, wenn der übliche Reinigungs-und Spülbetrieb bei Tintendruckeinrichtungen versagt.

Eine Ausführungsform der Erfindung ist in den Zeichnungen dargestellt und wird im folgenden beispielsweise näher beschrieben. Es zeigen

FIG 1 eine schematische Schnittdarstellung eines Tintendruckkopfes mit zugeordneter Abdeck- und Reinigungsvorrichtung und

FIG 2 eine schematische Schnittdarstellung einer bekannten Pipettenflasche zur Aufnahme der Reinigungsflüssigkeit.

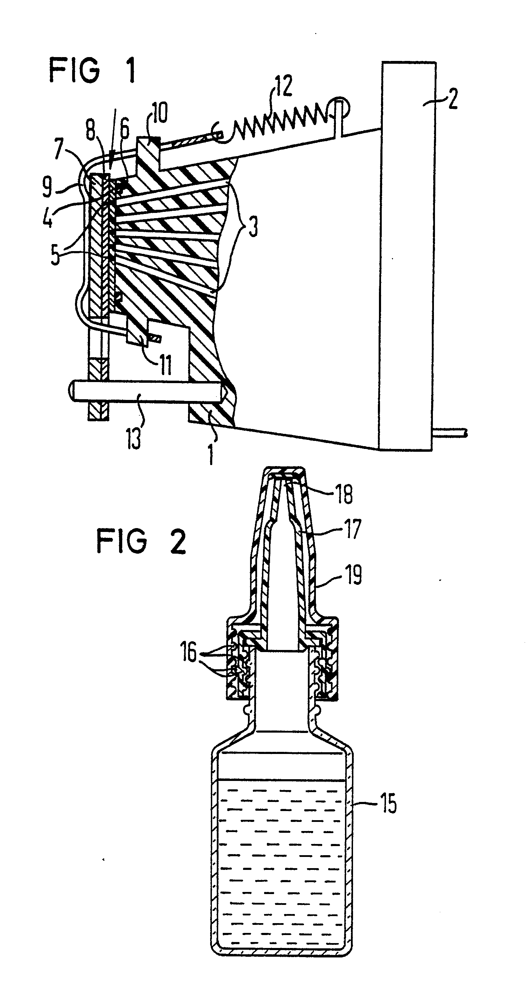

Der in der FIG 1 dargestellte Schreibkopf einer Tintenschreibeinrichtung besteht aus einem Kunststoffkörper 1, in dem zwischen einem Versorgungsteil 2 und der einem hier nicht dargestellten Aufzeichnungsträger zugewandten Begrenzungsfläche des Schreibkopfes die Tintenkanäle 3 verlaufen. Der Schreibkopf ist mit einer Düsenplatte abgeschlossen, über deren Austrittsöffnungen 5 in Richtung auf den Aufzeichnungsträger Tintentröpfchen ausgestoßen werden. Die Antriebselemente für die Tintenkanäle 3 und damit für den Ausstoß von Tintentröpfchen sind beispielsweise Piezoelemente. Diese befinden sich im Innern des Schreibkopfes und sind bei dieser Darstellung nicht sichtbar. Die Düsenplatte 4 ist von einem Dichtring 6 umgeben. Zur Abdekkung und Reinigung der Austrittsöffnungen 5 ist der Dichtschieber 7 vorgesehen, der auf seiner, dem Schreibkopf zugewandten Seite mit einer Folie, beispielsweise mit einer Teflonfolie 8 überzogen ist. Der Dichtschieber 7 wird mittels eines federnden Bügels 9 zusammen mit der Düsenplatte 4 gegen den Schreibkopf 1 gedrückt. Am Schreibkopf 1 sind zu diesem Zweck zwei Ansätze 10 und 11 vorgesehen, in die der Bügel 9 eingreift. Er wird mittels einer Spannfeder 12 gehalten. Dabei wird der Dichtring durch die Andruckkraft des Bügels 9 verformt, so daß eine exakte Anlage der Düsenplatte auf der Begrenzungs-oder Mündungsfläche des Schreibkopfes und damit eine sehr sichere Abdichtung gewährleistet ist. Der Dichtschieber selbst ist an einem Stift 13 der ebenfalls am Schreibkopf befestigt ist, drehbar gelagert und wird mittels einer hier nicht dargestellten Kurbeleinrichtung auf der Düsenplatte 4 verschwenkt und damit die Austrittsöffnungen 5 der Tintenkanäle abgedichtet bzw. durch Verschieben des Dichtschiebers 7 gereinigt.

Ist die Oberfläche der Düsenplatte 4 durch Papierstaub oder Tintenreste verkrustet und sind damit die Austrittsöffnungen 5 verklebt, so wird eine in einer Pipettenflasche gemäß FIG 1 befindliche Reinigungsflüssigkeit in den durch Pfeil gekennzeichneten Bereich der FIG 1 geträufelt und damit die Austrittsöffnungen 5 mit der Reinigungsflüssigkeit benetzt. Dies kann vor oder während der Bewegung des Dichtschiebers 7 erfolgen.

Der Dichtschieber 7 reinigt dann die Düsenplatte 4 von dem angelösten Papierstaub und Tintenresten durch seine Wischerbewegung. Nach dem eigentlichen Reinigungsvorgang wird dann eine Spülprozedur eingeleitet, bei dem der Druck in der Tintendruckeinrichtung auf das Tintensystem erhöht wird und somit Tinte aus den Austrittsöffnungen 5 austritt. Diese austretende Tinte entfernt evtl. in die Austrittsöffnungen 5 eingetretene Spülflüssigkeit.

Es ist jedoch auch denkbar, den Dichtschieber ortsfest anzuordnen und den Tintenkopf zum Reinigen in eine dem Dichtschieber gegenüberliegende Reinigungsposition zu bringen. Unter "beweglichem Dichtschieber" werden deshalb beide Möglichkeiten subsumiert.

Enthält die bei dem Tintendrucker verwendete Tinte als Grundsubstanz verschiedene Glykole , so hat sich als besonders vorteilhaft herausgestellt, als Reinigungsmittel für angetrocknete Tinte eine Reinigungsflüssigkeit zu verwenden, die die Tinte anlösende und/oder Tinte unterwandernde Wirkstoffe wie Alkohol oder Kohlenwasserstoffe enthält.

Wegen seiner Gesundheitsgefährlichkeit muß Methanol als Lösungsmittel ausscheiden, wäre jedoch verwendbar, wenn entsprechende Absaug- oder Abdeckeinrichtungen vorgesehen sind, die ein Austreten oder ein Einatmen schädlicher Dämpfe verhindern.

Verwendet man reines Äthanol als Reinigungsmittel, so kann dies zu einem Ausflocken des Tintenfarbstoffes führen.

Als günstig hat sich eine wässrige Lösung mit mindestens 40 % Volumenbestandteilen Äthanol ($CH_3$ -$CH_2OH$) erwiesen. Anstelle von Äthanol ist es vorteilhaft Propylalkohole, z. B. 2-Propanol (Isopropylalkohol) ($CH_3$ -$CHOH$ - $CH_3$) zu verwenden, da Propanole einen relativ hohen Siedepunkt aufweisen.

Besonders vorteilhaft ist eine wässrige Lösung mit einem Volumenanteil von etwa 50 % Äthylalkohol und etwa 50 % Volumenanteil demineralisiertem Wasser bzw. 50 % Isopropylalkohol und 50 % demineralisiertem Wasser.

Die Reinigungsflüssigkeit kann Zusätze in Form von grenzflächenaktiven Verbindungen, insbesondere nichtionogenen Tensiden wie Polyäther, z. B. Alkylphenolpolyglykoläther oder insbesondere Nonylphenolpolyglykoläther oder Fettsäurepolyglykoläther enthalten. Diese Zusätze verbessern u. a. die funktionswichtigen Benetzungseigenschaften durch Erniedrigung der Oberflächenspannung und erhöhen die Reinigungswirkung.

Werden Düsenplatten mit tintenabstoßenden Eigenschaften verwendet, ist es günstig, als Reinigungsflüssigkeiten Fluorkohlenwasserstoffe oder andere niedrig siedende Kohlenwasserstoffe zu verwenden, die die Tinte unterwandern. lösen und abspülbar machen.

Eine derartige Mischung führt zu keinem Verklumpen oder Ausflocken des Farbstoffes der Tinte, außerdem können auch elektrische Funken durch elektrische Kontakte nicht zu einer Zündung der Reinigungsflüssigkeit führen. Reinigungsflüssigkeit auf den Laufstangen des Druckerwagens der Druckeinrichtung bewirkt keine Veränderung der Wagengeschwindigkeit und damit keine mechanische Störung des Druckbetriebes.

Auch greift diese Reinigungsflüssigkeit die Materialien des Tintendruckwerkes nicht an bzw. verhält sich passiv gegenüber den Oberflächenenergien.

Um die Reinigungsflüssigkeit in leichter Weise dem Tintendruckkopf und insbesondere der Abdeck-und Reinigungseinrichtung 7 zuführen zu können, wird sie in einer Pipettenflasche entsprechend der FIG 2 abgefüllt. Sie besteht aus einem Vorratsbehälter 15 mit Gewindeverschluß 16 die aus Kunststoff hergestellt sein kann, sowie einer auf den Vorratsbehälter 15 aufsetzbare Pipette 17 aus Gummi oder anderem elastischem Werkstoff mit einer zentralen Öffnung 18, die über einen Schraubverschluß 19 auf der Öffnung des Vorratsbehälters 15 aufschraubbar ist. Durch Zusammendrücken der Pipette 17 wird eine dosierte Menge - die für die eigentliche Reinigungsprozedur ausreichend ist - aus der Öffnung 18 ausgepreßt und kann somit in den Bereich des Dichtschiebers 7 (Pfeil FIG 1) geträufelt werden.

## Ansprüche

1. Verfahren zum Reinigen des Austrittsbereiches (5) von Schreibdüsen in Tintenstrahldruckern, die insbesondere mit glykolhaltiger Tinte schreiben und die einen den Austrittsbereich (5) überstreichenden beweglichen Dichtschieber (7) aufweisen **gekennzeichnet** durch die folgenden Verfahrensschritte
- vor oder während der Bewegung des Dichtschiebers (7) wird der Austrittsbereich (5) mit einer Reinigungsflüssigkeit benetzt, die die Tinte anlösende und/oder die Tinte unterwandernde Wirkstoffe aufweist.
- zum Entfernen der Reinigungsflüssigkeit aus dem Austrittsbereich (5) wird ein Spülvorgang am Tintenkopf (1) des Tintenstrahldruckers ausgelöst, bei dem Tinte aus dem Austrittsbereich (5) austritt.

2. Reinigungsflüssigkeit zur Durchführung des Verfahrens nach Anspruch 1, **gekennzeichnet** durch eine wässrige Lösung mit mindestens 40 % Volumenbestandteilen Äthylalkohol und/oder Propylalkohol.

3. Reinigungsflüssigkeit nach Anspruch 2, **gekennzeichnet** durch eine wässrige Lösung mit einem Volumenanteil von etwa 50 % Äthylalkohol und/oder Propylalkohol und etwa 50 % Volumenanteil demineralisiertes Wasser.

4. Reinigungsflüssigkeit nach einem der Ansprüche 2 oder 3, **gekennzeichnet** durch die Verwendung von Zusätzen in Form von grenzflächenaktiven Verbindungen, insbesondere nichtionogenen Tensiden.

5. Reinigungsflüssigkeit nach Anspruch 4, **gekennzeichnet** durch die Verwendung von Polyglykolätherverbindungen, insbesondere Nonylphenolpolyglykoläther oder Fettsäureamidpolyglykoläther.

6. Reinigungsflüssigkeit nach einem der Ansprüche 2 bis 5, **dadurch gekennzeichnet**, daß anstelle der wässrigen Lösung mit Alkohol niedrig siedende Kohlenwasserstoffe verwendet werden.

7. Reinigungsflüssigkeit nach Anspruch 6, **dadurch gekennzeichnet**, daß Fluorkohlenwasserstoffe verwendet werden.

8. Reinigungsflüssigkeit nach einem der Ansprüche 2 bis 7, **dadurch gekennzeichnet**, daß die Reinigungsflüssigkeit eine von der Tinte deutlich verschiedene, auffällige Farbe aufweist.

9. Vorrichtung zur Durchführung des Verfahrens nach Anspruch 1, **gekennzeichnet** durch die Verwendung einer an sich bekannten Pipettenflasche mit einem Vorratsbehälter (15) und einem auf den Vorratsbehälter (15) aufsetzbaren Dosierelement (17).

FIG 1

FIG 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | IBM TECHNICAL DISCLOSURE BULLETIN, Band 28, Nr. 6, November 1985, Seiten 2344,2345, IBM Corp., Armonk, US; "Maintenance system and sequence for impulse ink jet printer" * Insgesamt * | 1 | B 41 J 3/04 C 09 D 9/00 |
| A | US-A-4 479 136 (A.M. LEWIS) * Insgesamt * | 1,2,7 | |
| A | FR-A-2 210 691 (COLGATE-PALMOLIVE) * Ansprüche 1,2 * | 2,3 | |
| A | FR-A-2 502 010 (P. MORCAU) * Anspruch 1 * | 2,3 | |
| A | FR-A-2 564 105 (SOCIETE DES LESSIVES SAINT-MARC.) * Zusammenfassung * | 4,5 | |
| A | DE-A-2 810 989 (ROTAPRINT) * Insgesamt * | 6,7 | RECHERCHIERTE SACHGEBIETE (Int. Cl.4) |
| A | IBM TECHNICAL DISCLOSURE BULLETIN, Band 19, Nr. 10, März 1977, Seiten 3703,3704, Armonk, US; J. MEKO et al.; "Cleaning ink jet nozzles" | 6,7 | B 41 J C 09 D C 11 D |
| A | GB-A-2 086 806 (N.V. PHILIPS') | | |
| A | PATENT ABSTRACTS OF JAPAN, Band 9, Nr. 142 (M-388)[1865], 18. Juni 1985; JP-A-60 23 048 (MATSUSHITA DENKI SANGYO K.K.) 05-02-1985 | | |

Der vorliegende Recherchenbericht wurde für alle Patentansprüche erstellt

| Recherchenort | Abschlußdatum der Recherche | Prüfer |
|---|---|---|
| DEN HAAG | 14-06-1988 | VAN DEN MEERSCHAUT G. |

EPO FORM 1503 03.82 (P0403)